# EUROPÄISCHE PATENTSCHRIFT

(11) **EP 1 217 165 B1**
(45) Veröffentlichungstag und Bekanntmachung des Hinweises auf die Patenterteilung: **11.08.2004**
(21) Anmeldenummer: 01122770.9
(22) Anmeldetag: 21.09.2001
(51) Int. Cl.: E21B 10/58, E21B 10/44, B23B 51/02

(54) **Gesteinsbohrer**
Rock drill
Foret à roche

(30) Priorität: 22.12.2000 DE 20021710 U
(43) Veröffentlichungstag der Anmeldung: 26.06.2002
(73) Patentinhaber: DreBo Werkzeugfabrik GmbH, D-88361 Altshausen (DE)
(72) Erfinder: Dreps, Klaus, 88361 Altshausen (DE)
(74) Vertreter: Baronetzky, Klaus, Dipl.-Ing.

(56) Entgegenhaltungen:
- EP-A- 1 083 294
- DE-A- 3 020 284
- DE-A- 10 024 433
- DE-A- 19 537 900
- DE-A- 19 916 975
- DE-C- 19 653 155
- DE-U- 29 819 388
- GB-A- 2 302 664
- US-A- 5 173 014

## Beschreibung

Die Erfindung betrifft einen Gesteinsbohrer gemäß dem Oberbegriff von Anspruch 1.

Ein derartiger Gesteinsbohrer ist aus der DE-GM 90 02 555 bekannt. Diese Lösung zeichnet sich zwar im Grunde durch einen akzeptablen Kompromiss zwischen Rundlauf und Standzeit des Bohrers einerseits und Bohrleistung andererseits aus. Es wäre jedoch wünschenswert, wenn die Bohrleistung noch etwas verbessert wäre, ohne die guten Eigenschaften hinsichtlich Rundlauf und Standzeit des Bohrers zu verschlechtern.

Aus der DE-PS 196 53 155 ist ebenfalls ein Vierschneider bekannt, der besonders für das Bohren von inhomogenem Gestein geeignet ist. Andererseits bedingt die Asymmetrie des Bohrkopfes eine sorgfältige Führung gerade auch beim Ansatz des Bohrers am Bohrloch, so daß eine größere Unempfindlichkeit insofern wünschenswert wäre. Ferner ist aus der GB 2 302 664 ein Bohrer bekannt, der eine Hauptschneidplatte und zwei von der Hauptschneidplatte beabstandete Nebenschneidplatten aufweist.

Daher liegt der Erfindung die Aufgabe zugrunde, einen Gesteinsbohrer gemäß dem Oberbegriff von Anspruch 1 zu schaffen, der eine gute Standzeit mit einer verbesserten Bohrleistung bei gleichzeitiger vergleichsweise geringer Empfindlichkeit gegenüber einer unpräzisen Führung beim Anbohren verbindet.

Diese Aufgabe wird erfindungsgemäß durch Anspruch 1 gelöst. Vorteilhafte Weiterbildungen ergeben sich aus den Unteransprüchen.

Die erfindungsgemäße Lösung ermöglicht die gute Abstützung der Hauptschneidplatten und der Nebenschneidplatten in der je vorgesehenen Einfassung. Durch die erfindungsgemäß vorgesehene besondere Maßnahme, die Bohrmehlabfuhrnuten zur Bohrerspitze hin konvergierend, also aufeinander zu laufen zu lassen, ist die Bohrmehlabfuhrnut an der Bohrerstirnfläche besonders groß und dementsprechend die feste Stirnfläche des Bohrers besonders klein.

Überraschend ergaben Untersuchungen, die in Zusammenhang mit der Erfindung angestellt wurden, daß trotz der schräg zulaufenden Bohrmehlabfuhrnuten keine Bohrmehlpfropfe entstehen, und zwar dann, wenn die Schrägflächen sich lediglich über einen geringen Teil der parallelen Bohrmehlabfuhrnuten im Bohrerkopf erstrecken, und wenn der Konvergenzwinkel ° oder weniger beträgt. Mit dieser Maßnahme läßt sich die wirksame Stirnfläche, die den Vortrieb gerade bei Vierschneidern bislang stark beeinträchtigte, deutlich vermindern, so daß die Bohrleistung erhöht ist und die Bohrmehlabfuhrnut entsprechend vergrößert ist.

Insofern liegen vergleichbare Verhältnisse zu der Lösung beispielsweise gemäß der DE-PS 196 53 155 vor, wobei aber dennoch aufgrund der symmetrischen Anordnung der Nebenschneidplatten ein verbessertes Anbohrverhalten vorliegt, so daß auch über die Erstellung des Bohrlochs hinweg betrachtet präzise Bohrlochränder entstehen.

Durch die Maßnahme, die Nebenschneidplatten gegenüber der Hauptschneidplatte zurücktreten zu lassen, ist die Wirkung der Hauptschneidplatte zweischneiderähnlich intensiv. Der Bohrer erhält einen spitzeren Charakter, so daß die Bohrleistung erhöht ist. Durch die Konvergenz der Bohrmehlabfuhrnuten ergeben sich zugleich zur Bohrerstirnfläche hin sich verjüngende Einpassungen sowohl für die Nebenschneidplatte als auch die Hauptschneidplatte, so daß erfindungsgemäß ein für einen vierschneider überraschend schlanker Bohrkopf entsteht.

Die verbesserte Anbohrleistung kann auch in vorteilhafter Ausgestaltung der Erfindung durch eine ballige Zentrierspitze unterstützt werden, die zentral in der Hauptschneidplatte angeordnet ist.

Ferner ist das Gewicht des erfindungsgemäßen Bohrers durch die schlankere Ausgestaltung vermindert, so daß auch mit vergleichsweise leichten Bohrmaschinen erschütterungsarm gearbeitet werden kann, was der Akzeptanz des erfindungsgemäßen Gesteinsbohrers insgesamt zugute kommt.

In vorteilhafter Ausgestaltung der Erfindung ist es vorgesehen, die Konvergenz der Bohrmehlabfuhrnuten zueinander zur Stirnfläche des Bohrers hin so erfolgen zu lassen, dass sie zur Hauptschneidplatte hin und teilweise auch zu den Nebenschneidplatten verläuft. Durch diese Lösung wird die Einfassungen der Hauptschneidplatte besonders schlank, während die Einfassung der Nebenschneidplatten bei dieser Lösung teilweise kleinere Verschlankung erfahren, aber besonders stark zurücktreten, so daß deren Stirnfläche gegenüber der der Hauptschneidplatte benachbarten Stirnfläche nur in sehr begrenztem Umfang ins Gewicht fällt.

Hierbei lässt sich besonders günstig die Tatsache ausnutzen, daß die Schlagwinkel üblicher Bohrhämmer und Schlagbohrmaschinen 60° betragen, so daß eine jedenfalls von 90° stark divergierende Schlagwirkung entsteht.

Weitere Vorteile, Einzelheiten und Merkmale ergeben sich aus der nachfolgenden Beschreibung zweier Ausführungsbeispiele anhand der Zeichnungen.

Es zeigen:
- Fig. 1: eine Seitenansicht einer Ausführungform eines erfindungsgemäßen Gesteinsbohrers, unter Darstellung des Bohrkopfes;
- Fig. 2: eine Stirnansicht der Ausführungsform gemäß Fig. 1;
- Fig. 3: eine Seitenansicht des Bohrkopfes gemäß Fig. 1, jedoch aus einem um 90° gedrehten Winkel;
- Fig. 4: eine Seitenansicht einer weiteren Ausführungsform eines erfindungsgemäßen Gesteinsbohrers, unter Darstellung des Bohrerkopfes;
- Fig. 5: eine Ansicht der Ausführungsform gemäß Fig. 4 in der anderen Seitenansicht;
- Fig. 6: eine Stirnansicht der Ausführungsform gemäß Fig. 4; und

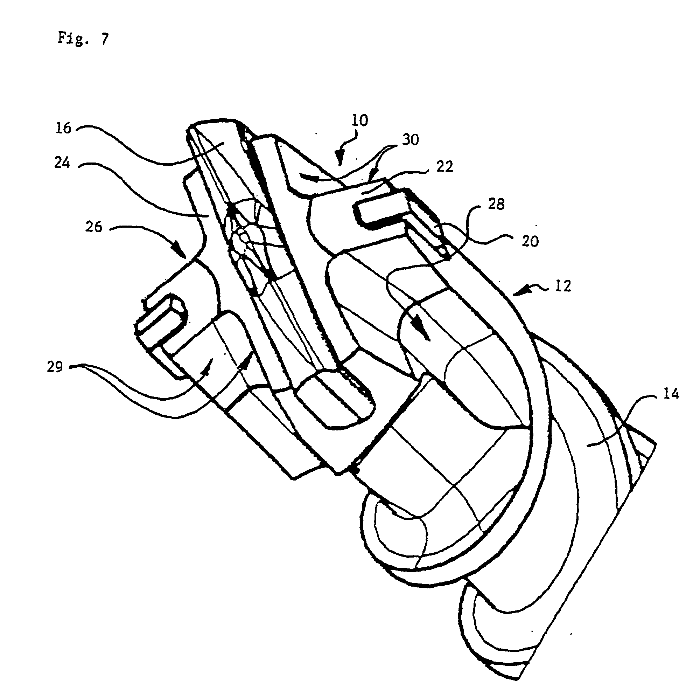

- Fig. 7: eine perspektivische Ansicht der Ausführungsform gemäß Fig. 4.

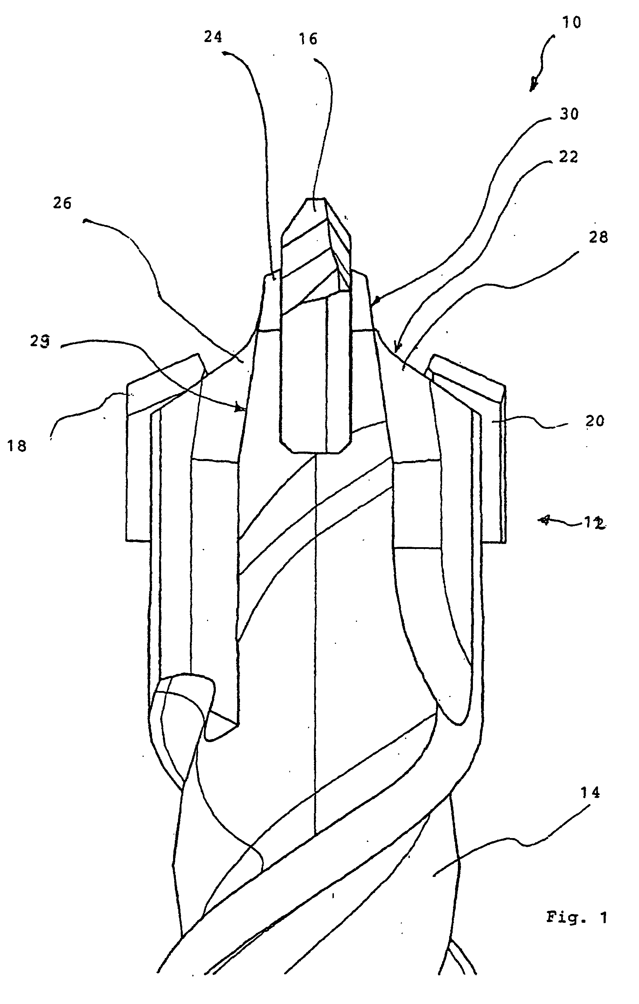

Der in Fig. 1 dargestellte Gesteinsbohrer 10 weist einen Bohrkopf 12 auf, an dem sich eine Bohrerwendel 14 in an sich bekannter Weise anschließt. Der Bohrkopf 12 weist eine Hauptschneidplatte 16 und zwei Nebenschneidplatten 18 und 20 auf, die sich in an sich bekannter Weise rechtwinklig zueinander erstrecken. In einer modifizierten Ausgestaltung ist es vorgesehen, dass die Nebenschneidplatten sich in einem von dem rechten Winkel deutlich beabstandeten Winkel, nämlich, im Winkel von 60% zu der Hauptschneidplatte 16 erstrecken. Bei dieser Lösung lässt sich eine Bohrmehlabfuhrnut - allerdings auf Kosten der anderen Bohrmehlabfuhrnuten - noch weiter vergrößern.

Die Nebenschneidplatten erstrecken sich über den Außenumfang des Bohrkopfes, und zwar um etwa ein Viertel ihrer radialen Länge. Sie enden deutlich beabstandet von der Hauptschneidplatte 16, wobei der Abstand etwa ihrer Länge entspricht.

In den Figuren ist ein Gesteinsbohrer mittleren Durchmessers, wie beispielsweise 16 mm, dargestellt. Bei kleineren Bohrern ist der genannte Abstand deutlich geringer, beispielsweise halb so groß, während er bei großen Bohrerdurchmessern deutlich größer ist, beispielsweise doppelt so groß. Es versteht sich, dass hier in weiten Bereichen eine Anpassung an die Erfordernisse vorgenommen werden kann.

Wie bereits aus Fig. 1 ersichtlich ist, springen sie gegenüber der Hauptschneidplatte 16 deutlich zurück. Das Rücksprungmaß beträgt etwa die halbe Tiefe der Hauptschneidplatte in axialer Richtung des Bohrers betrachtet.

Dementsprechend ist eine Stirnfläche 22 des Bohrers an diese Ausgestaltung angepaßt ausgebildet. Die Stirnfläche 22 verläuft recht spitz, wobei die Hauptschneidplatte 16 von ihrer Einfassung 24 in einer besonderen Weise erfindungsgemäß gehalten ist. Die Einfassung 24 wird von zwei Bohrmehlabfuhrnuten 26 und 28 begrenzt, die zur Stirnfläche 22 hin aufeinander zu konvergieren. Dementsprechend entstehen an der Einfassung 24 Schrägflächen 29 und 30, die die Einfassung 24 zur Spitze der Hauptschneidplatte 16 hin schlanker machen.

Die Schrägflächen 29 und 30 haben in dem dargestellten Ausführungsbeispiel einen Winkel von etwa 8° zur Bohrerachse hin. Sie erstrecken sich über ein Drittel der Länge der Bohrmehlabfuhrnuten im Bereich des Bohrkopfes 12. In diesem Bereich verlaufen die Bohrmehlabfuhrnuten 26 in an sich bekannter Weise parallel zur Bohrerachse, während sie im Bereich der Bohrerwendel 14 in ebenfalls an sich bekannter Weise spiralig verlaufen.

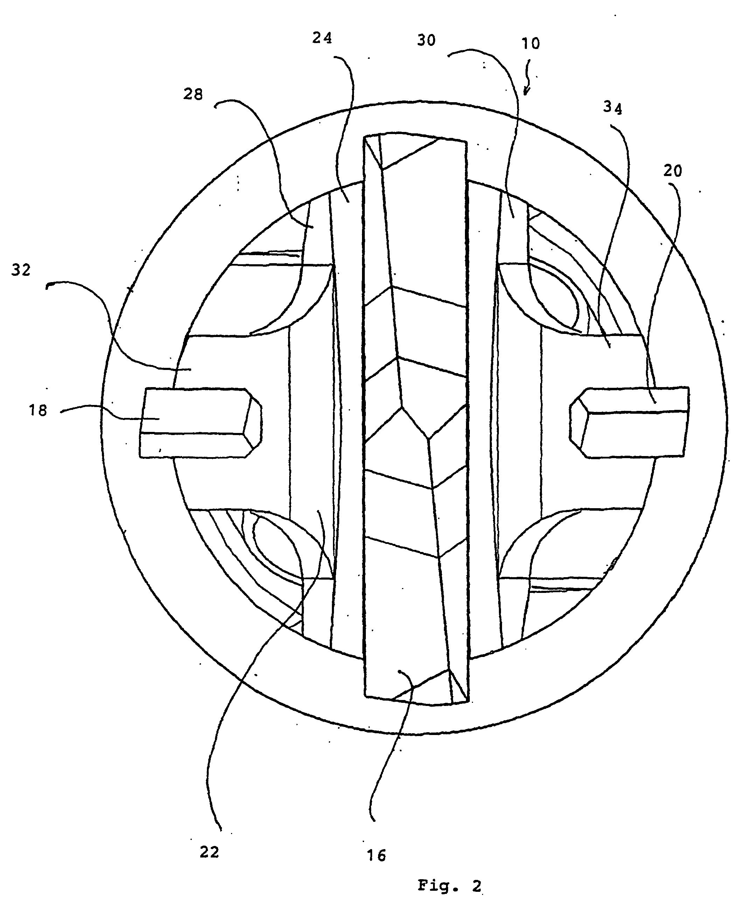

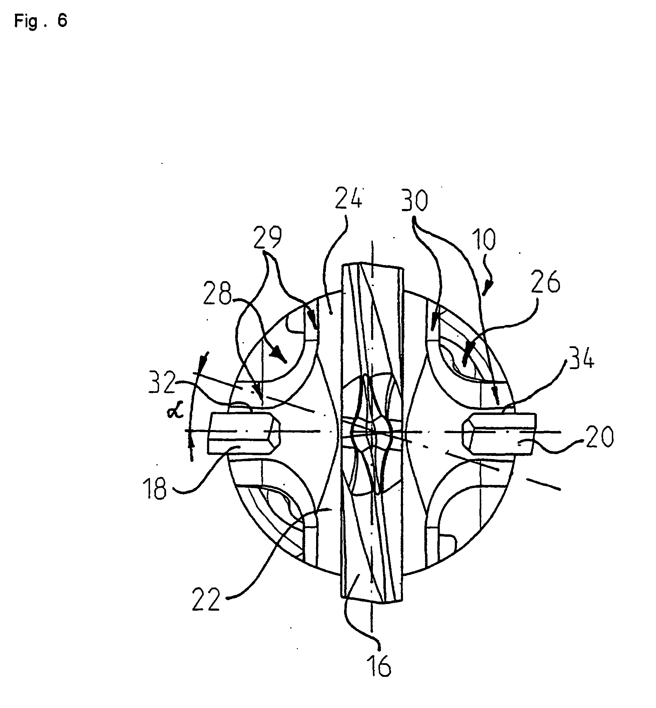

Aus Fig. 2 ist die Stirnfläche 22 des Bohrers 10 in der Draufsicht besser ersichtlich. Die Stirnfläche 22 ist in an sich bekannter weise etwa kreuzförmig ausgebildet. Quer von der Einfassung 24 weg erstrecken sich Einfassungen 32 und 34 der Nebenschneidplatten 18 und 20. In dem in Fig. 2 dargestellten Ausführungsbeispiel konvergieren die Einfassungen 32 und 34 nicht, wobei es sich versteht, dass es bei Bedarf ohne weiteres möglich ist, auch diese Einfassungen konvergieren zu lassen (Fig. 6).

Wie aus Fig. 2 ersichtlich ist, weist die Hauptschneidplatte 16 etwa das gleiche radiale Vorsprungmaß wie die Nebenschneidplatten 18 und 20 auf. Es versteht sich, daß diese Versprungmaße in weiten Bereichen an die Erfordernisse angepasst werden können. Für einen besonders guten Rundlauf ist eine Übereinstimmung der Vorsprungmaße günstig.

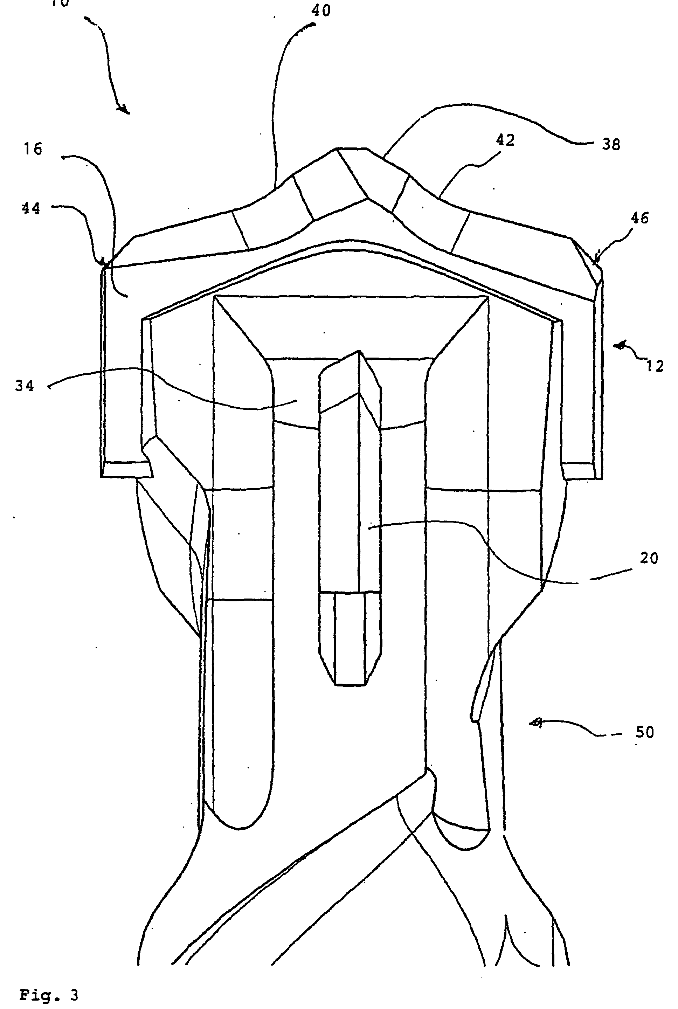

Aus Fig. 3 ist eine Ansicht des Bohrkopfes 12 aus einer gegenüber Fig. 1 um 90° gedrehten Richtung ersichtlich.

Die Hauptschneidplatte 16 ist - wie es aus Fig. 3 ersichtlich ist - in besonderer Weise ausgebildet. Mittig weist sie eine ballige Zentrierspitze 38 auf, an die sich je konkave Bereiche 40 und 42 anschließen. Am Außenumfang sind je zusätzliche Schrägflächen 44 und 46 vorgesehen, die sich in einem Winkel von etwa 45° erstrecken.

Wie aus dem Ausführungsbeispiel gemäß Fig. 3 ersichtlich ist, erstreckt sich unter dem Bohrkopf 12 ein recht schlanker Bohrerhals 50. An dieser Stelle verläuft die Haupterstreckungsrichtung des Gesteinsbohrers 10 - im Schnitt betrachtet - quer zu der Richtung der Hauptschneidplatte, wie es sich auch aus den Vergleich mit Fig. 1 ergibt.

Fig. 3 zeigt auch, dass die Nebenschneidplatten, von denen die Nebenschneidplatte 20 dargestellt ist, gegenüber der Hauptschneidplatte in axialer Richtung deutlich zurückspringen.

Auch in radialer Richtung können die Nebenschneidplatten 18, 20 vor der Hauptschneidplatte 16 enden, beispielsweise um 0,5 mm. Die Nebenschneidplatte 20 erstreckt sich nur über ihre Hälfte - in der Abwicklung betrachtet - mit der Hauptschneidplatte überlappend. Ihre hintere Hälfte erstreckt sich unterhalb oder hinter der Hauptschneidplatte 16, und ihre Spitze reicht gerade mal bis zur Hälfte der Hauptschneidplatte 16. Es versteht sich, dass die Einfassung 34 in gleicher Weise zurückverlagert ist, wie sich auch aus Fig. 1 ergibt. Diese Ausgestaltung ermöglicht den "2-Schneidcharakter" des erfindungsgemäßen Gesteinsbohrers trotz der gegenüber einem 2-Schneider verbesserten Rundlaufeigenschaften.

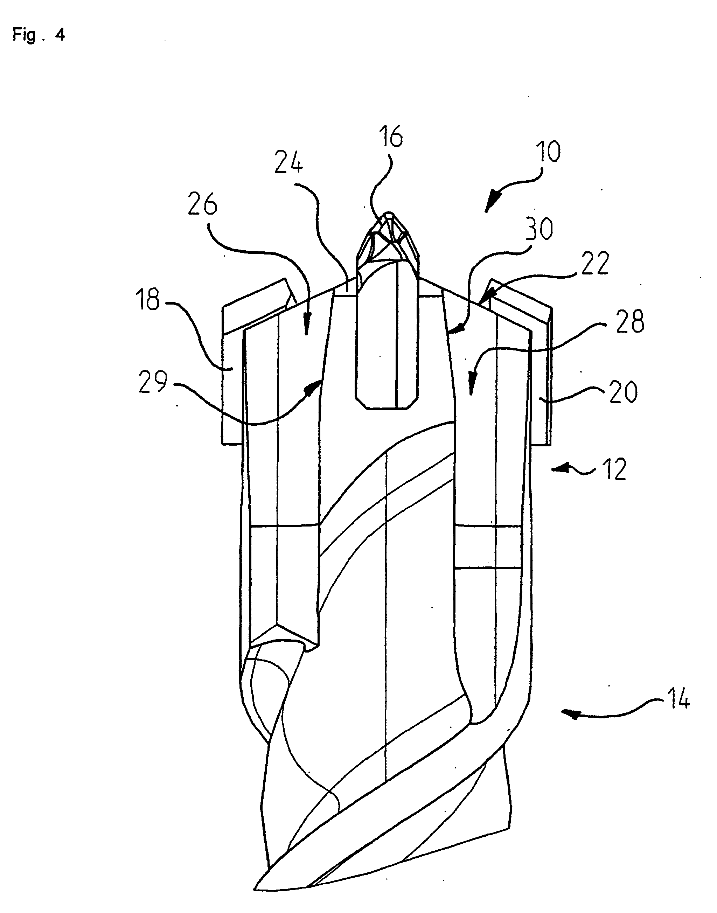

Aus Fig. 4 ist eine modifizierte Ausgestaltung eines erfindungsgemäßen Gesteinsbohrers ersichtlich. Hier wie auch in den weiteren Figuren weisen gleiche Bezugszeichen auf gleiche Teile hin. Bei dieser Lösung ist der Konvergenzbereich 29, 39 deutlich verlängert, und der Übergang vom geraden Bereich zum Konvergenzbereich ist mit einem Radius versehen. Ferner sind auch für die Einbettung der Nebenschneidplatten 18 und 20 Konvergenzbereiche vorgesehen, die Radien gegenüber den geraden Bereichen der axialen Bohrmehrabfuhrnuten 26 und 28 aufweisen.

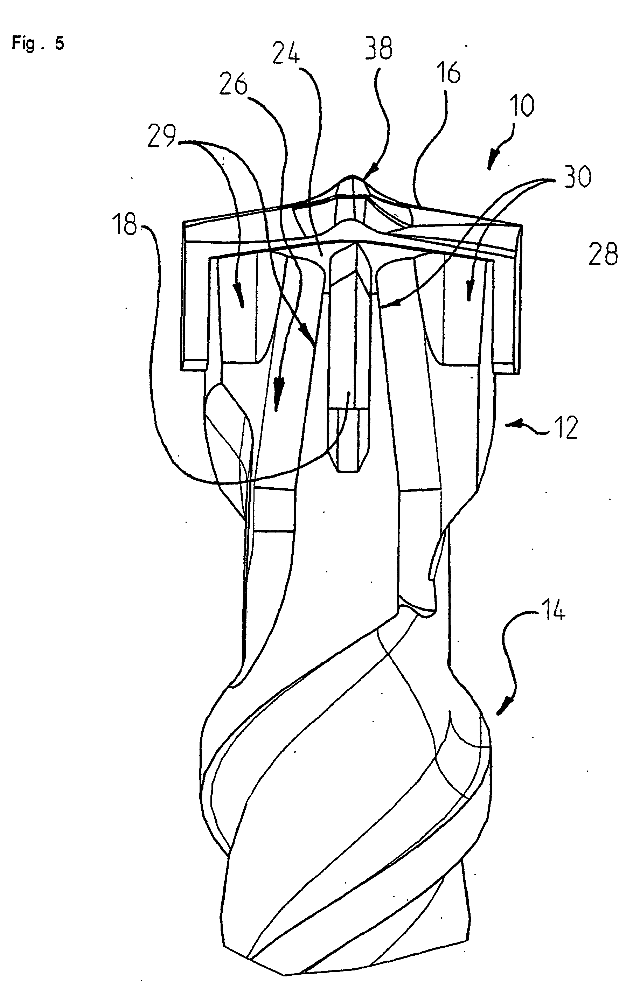

Wie aus Fig. 5 ersichtlich, ist die Hauptschneidplatte so gebildet, dass sie eine deutliche Zentrierspitze 38 ausbildet. Im Unterschied zu der Ausführungsform gemäß Fig. 1/3 verläuft die Hauptschneidplatte ohne die dortige äußere Schrägfläche 44 und 46, so dass außen eine besonders gute Räumwirkung entsteht.

Auch wenn die dargestellten Ausführungsbeispiele einen Winkelversatz der Nebenschneidplatten um 90 Grad zu der Hauptschneidplatte zeigen, versteht es sich, dass anstelle dessen ein Voreilen oder ein Nacheilen möglich ist. Wenn die Nebenschneidplatten 18, 20 bezogen auf die 90 Grad-Position voreilen, also sich beispielsweise im Winkel von 80 Grad erstrecken, erhält die Hauptschneideplatte stärker einen Zweischneidercharakter, während die Räumwirkung der Nebenschneidplatten reduziert ist.

Wenn sie hingegen nacheilen, also sich beispielsweise in einem Winkel von 100 Grad zu der Hauptschneidplatte erstrecken, ist die Räumwirkung eher stärker, nachdem dann ein etwas größerer Winkelbereich für das Räumen für die Nebenschneidplatten ansteht. Die Möglichkeiten der unterschiedlichen Winkel zwischen den Nebenschneidplatten und der Hauptschneidplatte sind über den Winkel α angedeutet.

## Patentansprüche

1. Gesteinsbohrer, mit einer Hauptschneidplatte, die sich über einen Bohrkopf erstreckt, und mit zwei gegenüber der Hauptschneidplatte um etwa 90° versetzten Nebenschneidplatten, wobei der Außenumfang des von den Nebenschneidplatten überstrichenen Bohrlochkreises im wesentlichen dem Außenumfang des von der Hauptschneidplatte überstrichenen Bohrlochkreises entspricht und wobei zur Bohrachse im wesentlichen parallele Bohrmehlabfuhrnuten den Bohrkopf durchtreten, die sich je zwischen einer Nebenschneidplatte und der benachbarten Seite der Hauptschneidplatte erstrecken und zur Bohrerspitze hin konvergierend ausgebildet sind,
**dadurch gekennzeichnet, dass** die Nebenschneidplatten (18, 20) gegenüber der Hauptschneidplatte (16) in der Abwicklung betrachtet zurücktreten, und dass die Hauptschneidplatte (16) von einer sich zu ihrer Spitze hin verjüngenden Einfassung (24) gehalten ist, wobei die Einfassung (24) von den konvergierend ausgebildeten Bohrmehlabfuhrnuten (26, 28) begrenzt ist, und wobei die Bohrerspitze als Zentrierspitze ausgebildet ist.

2. Gesteinsbohrer nach Anspruch 1,
**dadurch gekennzeichnet, dass** die Bohrmehlabfuhrnuten (26) über die Höhe des Bohrkopfs (12) hinweg betrachtet einen Konvergenzbereich (29; 30) und einen linearen Bereich aufweisen, wobei der Konvergenzbereich der Bohrerspitze benachbart ist und sich über ein Drittel der Länge der Bohrmehlabfuhrnuten (26, 28) im Bereich des Bohrkopfes erstreckt.

3. Gesteinsbohrer nach einem der vorhergehenden Ansprüche,
**dadurch gekennzeichnet, dass** ein Konvergenzbereich (29, 30) der Bohrmehlabfuhrnuten (26) sich über das vordere Zehntel bis die vordere Hälfte, bevorzugt etwa das vordere Drittel des Bohrkopfs (12) erstreckt.

4. Gesteinsbohrer nach einem der vorhergehenden Ansprüche,
**dadurch gekennzeichnet, dass** die Tiefe der Bohrmehlabfuhrnuten (26) im Konvergenzbereich (29, 30) zunimmt, bevorzugt um 5% bis 35% und insbesondere etwa um 20%.

5. Gesteinsbohrer nach einem der vorhergehenden Ansprüche,
**dadurch gekennzeichnet, dass** Axial-Bohrmehlabfuhrnuten (26, 28) des Bohrkopfs (12) in Spiral-Bohrmehlabfuhrnuten der Bohrerwendel (14) übergehen und dass der Übergang keine der Bohrmehlabfuhr entgegen weisende Kante aufweist.

6. Gesteinsbohrer nach einem der vorhergehenden Ansprüche,
**dadurch gekennzeichnet, dass** die Nebenschneidplatten (18, 20) gegenüber der Hauptschneidplatte (16) um ihre Stärke bis das Fünffache ihrer Stärke, insbesondere um etwas mehr als das Doppelte ihrer Stärke, zurückspringen.

7. Gesteinsbohrer nach einem der vorhergehenden Ansprüche,
**dadurch gekennzeichnet, dass** jede Nebenschneidplatte (18, 20) in einer Einfassung (32, 34) gehalten ist, deren Breite etwa das Dreifache, insbesondere weniger als das Dreifache der Breite der Nebenschneidplatte beträgt.

8. Gesteinsbohrer nach einem der vorhergehenden Ansprüche,
**dadurch gekennzeichnet, dass** die Einfassungen (32, 34) der Nebenschneidplatten (18, 20) gegenüber der Einfassung (24) der Hauptschneidplatte (16) zurückspringen.

9. Gesteinsbohrer nach einem der vorhergehenden Ansprüche,
**dadurch gekennzeichnet, dass** die Nebenschneidplatten (18, 20) soweit nach außen verlagert sind, dass ihr Abstand zur Haupt-Schneidplatte (16) etwa ihrer Länge entspricht.

10. Gesteinsbohrer nach einem der vorhergehenden Ansprüche,
**dadurch gekennzeichnet, dass** die Hauptschneideplatte (16) eine Zentrierspitze (38) mit einer im wesentlichen balligen Grundform aufweist.

11. Gesteinsbohrer nach einem der vorhergehenden Ansprüche,
**dadurch gekennzeichnet, dass** die Hauptscheideplatte (16) an ihren Außenenden Schrägflächen (44, 46) aufweist, die - in der Abwicklung betrachtet - außerhalb des Bereichs der Nebenschneidplatten (18, 20) enden.

12. Gesteinsbohrer nach einem der vorhergehenden Ansprüche,
**dadurch gekennzeichnet, dass** die Hauptschneidplatte (16) in der Seitenansicht konkave Bereiche (40, 42) aufweist, die sich an die Zentrierspitze (38) anschließen.

13. Gesteinsbohrer nach einem der vorhergehenden Ansprüche,
**dadurch gekennzeichnet, dass** die Nebenschneidplatten (18, 20) in Nuten aufgenommen sind, die um etwa die Länge der Nebenschneidplatte (20), vor der Hauptschneidplatte (16) enden.

14. Gesteinsbohrer nach einem der vorhergehenden Ansprüche,
**dadurch gekennzeichnet, dass** zwischen der Bohrerwendel (14) und dem Bohrkopf (12) ein Bohrhals (50) vorgesehen ist, und dass die Einfassungen (24, 32, 34) für die Nebenschneidplatten (18, 20) und die Hauptschneidplatte (16) mindestens teilweise gegenüber dem Bohrhals (50) vorspringen.

15. Gesteinsbohrer nach einem der vorhergehenden Ansprüche,
**dadurch gekennzeichnet, dass** ein Übergangsbereich zwischen den axial verlaufenden Bohrmehlabfuhrnuten (26, 28) zu den konvergierenden Bereichen (29, 30) der Bohrmehlabfuhrnuten scharfkantig ausgebildet ist, wobei die Übergänge insbesondere als Radius ausgebildet sein können.

16. Gesteinsbohrer nach einem der vorhergehenden Ansprüche,
**dadurch gekennzeichnet, dass** eine Axial-Bohrmehlabfuhrnut (26, 28) einen Konvergenzbereich (29, 30) aufweist, der sich über mehr als die Länge der Nebenschneidplatten erstreckt.

17. Gesteinsbohrer nach einem der vorhergehenden Ansprüche,
**dadurch gekennzeichnet, dass** die Nebenschneidplatten (18, 20) gegenüber der Hauptschneidplatte (16) um einen Winkel von 60 bis 120°, bevorzugt etwa um 90°, versetzt angeordnet sind.

## Claims

1. Rock drill, with a major cutting plate, which extends over a drill head, and with two minor cutting plates, which are staggered by approximately 90° with respect to the major cutting plate, wherein the outer circumference of the drill hole circle which is covered by the minor cutting plates corresponds substantially to the outer circumference of the drill hole circle which is covered by the major cutting plate, and wherein drillings removal flutes, which are substantially parallel to the drill axis, pass through the drill head, which flutes extend between each minor cutting plate and the adjacent side of the major cutting plate and are formed so as to converge towards the drill point,
**characterised in that**, considered in a developed view, the minor cutting plates (18, 20) are set back with respect to the major cutting plate (16), and that the major cutting plate (16) is retained by an enclosure (24) which tapers towards its point, wherein the enclosure (24) is bounded by the convergent drillings removal flutes (26, 28), and wherein the drill point is formed as a centre point.

2. Rock drill according to Claim 1,
**characterised in that**, considered over the height of the drill head (12), the drillings removal flutes comprise a convergence region (29; 30) and a linear region, wherein the convergence region is adjacent to the drill point and extends over a third of the length of the drillings removal flutes (26, 28) in the region of the drill head.

3. Rock drill according to any one of the preceding Claims,
**characterised in that** a convergence region (29, 30) of the drillings removal flutes (26) extends over the front tenth to the front half, preferably approximately the front third, of the drill head (12).

4. Rock drill according to any one of the preceding Claims,
**characterised in that** the depth of the drillings removal flutes (26) increases in the convergence region (29, 30), preferably by 5% to 35% and in particular approximately by 20%.

5. Rock drill according to any one of the preceding Claims,
**characterised in that** axial drillings removal flutes (26, 28) of the drill head (12) pass into spiral drillings removal flutes of the drill helix (14), and that the transition does not comprise any edge which points opposite to the drillings removal.

6. Rock drill according to any one of the preceding Claims,
**characterised in that** the minor cutting plates (18, 20) are set back with respect to the major cutting plate (16) by their thickness up to five times their thickness, in particular by slightly more than twice their thickness.

7. Rock drill according to any one of the preceding Claims,
**characterised in that** each minor cutting plate (18, 20) is retained in an enclosure (32, 34) whose width is approximately three times, in particular less than three times, the width of the minor cutting plate.

8. Rock drill according to any one of the preceding Claims,
**characterised in that** the enclosures (32, 34) of the minor cutting plates (18, 20) are set back with respect to the enclosure (24) of the major cutting plate (16).

9. Rock drill according to any one of the preceding Claims,
**characterised in that** the minor cutting plates (18, 20) are moved outwards to an extent such that their distance from the major cutting plate (16) corresponds approximately to their length.

10. Rock drill according to any one of the preceding Claims,
**characterised in that** the major cutting plate (16) comprises a centre point (38) with a substantially crowned basic form.

11. Rock drill according to any one of the preceding Claims,
**characterised in that**, at its outer ends, the major cutting plate (16) comprises oblique faces (44, 46) which - considered in a developed view - end outside of the region of the minor cutting plates (18, 20).

12. Rock drill according to any one of the preceding Claims,
**characterised in that**, considered in a side view, the major cutting plate (16) comprises concave regions (40, 42) which adjoin the centre point (38).

13. Rock drill according to any one of the preceding Claims,
**characterised in that** the minor cutting plates (18, 20) are held in flutes which end before the major cutting plate (16) by approximately the length of the minor cutting plate (20).

14. Rock drill according to any one of the preceding Claims,
**characterised in that** a drill neck (50) is provided between the drill helix (14) and the drill head (12), and that the enclosures (24, 32, 34) for the minor cutting plates (18, 20) and the major cutting plate (16) protrude at least in part with respect to the drill neck (50).

15. Rock drill according to any one of the preceding Claims,
**characterised in that** a transition region between the axially extending drillings removal flutes (26, 28) and the convergent regions (29, 30) of the drillings removal flutes (26, 28) is formed with sharp edges, wherein the transitions may in particular be formed as a radius.

16. Rock drill according to any one of the preceding Claims,
**characterised in that** an axial drillings removal flute (26, 28) comprises a convergence region (29, 30) which extends over more than the length of the minor cutting plates.

17. Rock drill according to any one of the preceding Claims,
**characterised in that** the minor cutting plates (18, 20) are staggered by an angle of 60 to 120°, preferably approximately by 90°, with respect to the major cutting plate (16).

## Revendications

1. Foret à roche comportant une plaquette de coupe principale, qui s'étend sur une tête de forage, ainsi que deux plaquettes de coupe auxiliaires décalées d'à peu près 90° par rapport à la plaquette de coupe principale, la circonférence extérieure du cercle de forure balayé par les plaquettes de coupe auxiliaires correspondant sensiblement à la circonférence extérieure du cercle de forure balayé par la plaquette de coupe principale, et des rainures d'évacuation de poussière de forage sensiblement parallèles à l'axe de forage traversant la tête de forage, qui s'étendent chacune entre une plaquette de coupe auxiliaire et le côté voisin de la plaquette de coupe principale, et étant réalisées de manière convergente en direction de la pointe de foret,
**caractérisé en ce que** les plaquettes de coupe auxiliaires (18, 20), considérées d'après l'avance, sont en retrait par rapport à la plaquette de coupe principale (16), et **en ce que** la plaquette de coupe principale (16) est maintenue par une monture (24) s'effilant en direction de la pointe de ladite plaquette, la monture (24) étant délimitée par les rainures d'évacuation de poussière de forage (26, 28) réalisées de manière convergente et la pointe de foret étant réalisée sous forme de pointe de centrage.

2. Foret à roche selon la revendication 1, **caractérisé en ce que** les rainures d'évacuation de poussière de forage (26), considérées sur la hauteur de la tête de forage (12), comportent une zone de convergence (29 ; 30) et une zone linéaire, la zone de convergence étant située à proximité de la pointe de foret et s'étendant sur un tiers de la longueur des rainures d'évacuation de poussière de forage (26, 28) dans la zone de la tête de forage.

3. Foret à roche selon l'une des revendications précédentes, **caractérisé en ce qu'**une zone de convergence (29, 30) des rainures d'évacuation de poussière de forage (26) s'étend sur une distance comprise entre le dixième avant et la moitié avant de la tête de forage (12), de préférence à peu près sur le tiers avant.

4. Foret à roche selon l'une des revendications précédentes, **caractérisé en ce que** la profondeur des rainures d'évacuation de poussière de forage (26) augmente dans la zone de convergence (29, 30), de préférence de 5 % à 35 % et notamment d'environ 20 %.

5. Foret à roche selon l'une des revendications précédentes, **caractérisé en ce que** des rainures d'évacuation de poussière de forage axiales (26, 28) de la tête de forage (12) se transforment en rainures hélicoïdales d'évacuation de poussière de forage faisant partie de l'hélice de foret (14) et **en ce que** la transition ne comporte aucun angle gênant l'évacuation de poussière de forage.

6. Foret à roche selon l'une des revendications précédentes, **caractérisé en ce que**, par rapport à la plaquette de coupe principale (16), les plaquettes de coupe auxiliaires (18, 20) sont en retrait de jusqu'à cinq fois leur épaisseur, notamment d'environ un peu plus de deux fois leur épaisseur.

7. Foret à roche selon l'une des revendications précédentes, **caractérisé en ce que** chaque plaquette de coupe auxiliaire (18, 20) est maintenue dans une monture (32, 34) dont la largeur fait à peu près le triple, notamment moins du triple, de la largeur de la plaquette de coupe auxiliaire.

8. Foret à roche selon l'une des revendications précédentes, **caractérisé en ce que** les montures (32, 34) des plaquettes de coupe auxiliaires (18, 20) sont en retrait par rapport à la monture (24) de la plaquette de coupe principale (16).

9. Foret à roche selon l'une des revendications précédentes, **caractérisé en ce que** les plaquettes de coupe auxiliaires (18, 20) sont décalées vers l'extérieur de sorte que leur écartement par rapport à la plaquette de coupe principale (16) corresponde à peu près à leur longueur.

10. Foret à roche selon l'une des revendications précédentes, **caractérisé en ce que** la plaquette de coupe principale (16) comporte une pointe de centrage (38) ayant une forme générale sensiblement bombée.

11. Foret à roche selon l'une des revendications précédentes, **caractérisé en ce que** la plaquette de coupe principale (16) comporte, à ses extrémités extérieures, des surfaces obliques (44, 46) qui - considérées en projection développée - se terminent en dehors de la zone des plaquettes de coupe auxiliaires (18, 20).

12. Foret à roche selon l'une des revendications précédentes, **caractérisé en ce que** la plaquette de coupe principale (16) comporte, si on la regarde latéralement, des zones concaves (40, 42) qui se raccordent à la pointe de centrage (38).

13. Foret à roche selon l'une des revendications précédentes, **caractérisé en ce que** les plaquettes de coupe auxiliaires (18, 20) sont logées dans des encoches qui se terminent devant la plaquette de coupe principale (16) à une distance d'à peu près la longueur de la plaquette de coupe auxiliaire (20).

14. Foret à roche selon l'une des revendications précédentes, **caractérisé en ce qu'**il est prévu un col de forage (50) entre l'hélice de foret (14) et la tête de forage (12) et **en ce que** les montures (24, 32, 34) des plaquettes de coupe auxiliaires (18, 20) et de la plaquette de coupe principale (16) font saillie, au moins en partie, par rapport au col de forage (50).

15. Foret à roche selon l'une des revendications précédentes, **caractérisé en ce qu'**une zone de transition située entre les rainures d'évacuation de poussière de forage (26, 28) qui s'étendent axialement est réalisée à arêtes vives vers les zones convergentes (29, 30) des rainures d'évacuation de poussière de forage, les transitions pouvant notamment être réalisées sous forme de rayon.

16. Foret à roche selon l'une des revendications précédentes, **caractérisé en ce qu'**une rainure axiale d'évacuation de poussière de forage (26, 28) comporte une zone de convergence (29, 30) qui s'étend sur plus de la longueur des plaquettes de coupe auxiliaires.

17. Foret à roche selon l'une des revendications précédentes, **caractérisé en ce que** les plaquettes de coupe auxiliaires (18, 20) sont disposées en étant décalées d'un angle de 60 à 120°, de préférence d'à peu près 90°, par rapport à la plaquette de coupe principale (16).
